# EUROPÄISCHE PATENTSCHRIFT

(11) **EP 3 209 511 B1**
(45) Veröffentlichungstag und Bekanntmachung des Hinweises auf die Patenterteilung: **23.05.2018**
(21) Anmeldenummer: 15763886.7
(22) Anmeldetag: 11.09.2015
(51) Int. Cl.: B60G 21/05, B60B 35/02

(54) **QUERTRÄGER FÜR EINE VERBUNDLENKERACHSE**
CROSSMEMBER FOR A TWIST-BEAM REAR AXLE
TRAVERSE POUR ESSIEU À TRAVERSE DÉFORMABLE EN TORSION

(30) Priorität: 22.10.2014 DE 102014221472
(43) Veröffentlichungstag der Anmeldung: 30.08.2017
(73) Patentinhaber: VOLKSWAGEN AKTIENGESELLSCHAFT, 38440 Wolfsburg (DE)
(72) Erfinder: KELLER, Martin, 38106 Braunschweig (DE); HEIDRICH, Jens, 38110 Braunschweig (DE); KAISER, Mike, 38528 Adenbüttel (DE)
(86) Internationale Anmeldenummer: PCT/EP2015/070812
(87) Internationale Veröffentlichungsnummer: WO 2016/062455

(56) Entgegenhaltungen:
- EP-A1- 2 098 391
- EP-A2- 0 861 744
- DE-A1- 4 003 922
- DE-A1- 4 330 192
- DE-A1-102008 062 901
- DE-A1-102009 050 058
- DE-A1-102011 011 118
- DE-U1- 20 101 602
- FR-A1- 2 888 530
- JP-A- S5 853 504
- JP-A- 2001 113 925

## Beschreibung

Die Erfindung bezieht sich auf einen Querträger für eine Verbundlenkerachse mit den Merkmalen des Oberbegriffs von Patentanspruch 1.

Verbundlenkerachsen verbinden die Hinterräder eines Kraftfahrzeugs mit dem Fahrzeugaufbau. Typischerweise bewegt sich bei Verbundlenkerachsen ein kurvenäußeres Rad unter einer von außen wirkenden Seitenkraft in Richtung Nachspur. Um einen solchen Nachspureffekt gering zu halten, müssen Verbundlenkerachsen möglichst seiten-, sturz- und vorspursteif sein. Der nachteilige Nachspureffekt unter Seitenkraft kann durch geeignete elastokinematische Spur- und Sturzänderungen beim wechselseitigen Ein- und Ausfedern der Längslenker kompensiert werden.

Die elastokinematischen Eigenschaften werden stark durch Lage und Formgebung des Profils des Querträgers beeinflusst. Durch eine definierte Torsionsverformung des Querträgers wird in Abhängigkeit der Profilform beim wechselseitigen Ein- und Ausfedern der Längslenker ein Wanklenken in Richtung Vorspur erzielt.

Weiterhin ist ein möglichst geringes Bauteilgewicht anzustreben, um die ungefederten Massen am Fahrzeug gering zu halten.

Desweiteren ist zu beachten, dass entsprechende Querträger in großen Stückzahlen kostengünstig herstellbar sein müssen.

Ein Querträger der eingangs genannten Art ist aus DE 10 2008 069 901 A1 bekannt.

Im Hinblick auf die vorstehend erläuterte Problemstellung wird in DE 10 2009 050 058 A1 vorgeschlagen, durch eine Wanddickenvariation am Querträger unter Beibehaltung oder Verminderung des Bauteilgewichts die Bauteilsteifigkeiten zu erhöhen. Über die Wahl der Wanddicken soll die Abstimmung der Steifigkeitswerte des Querträgers erfolgen. Eine solche Wanddickenvariation ist jedoch fertigungstechnisch aufwändig.

Im Hinblick auf die vorstehend erläuterte Problemstellung ist aus EP 2 098 391 A1 weiterhin bekannt, an einem Mittelabschnitt des Querträgers einen omegaförmigen Querschnitt vorzusehen und weiter außen gelegene Abschnitte mit einem U-förmigen Querschnitt auszubilden. 10, 11 aufweist. Über die Wahl der Krümmungen am omegaförmigen Querschnitt soll die Abstimmung der Steifigkeitswerte des Querträgers erfolgen.

Ein weiterer relevanter Querträger für eine Verbundlenkerachse ist aus der FR 2 888 530 A1 bekannt.

Der Erfindung liegt die Aufgabe zugrunde, vor dem Hintergrund des Zielkonflikts zwischen Bauteilgewicht und Sollsteifigkeiten einfach und kostengünstig herstellbare Alternativen für einen Querträger einer Verbundlenkerachse aufzuzeigen.
Diese Aufgabe wird durch einen Querträger gemäß Patentanspruch 1 gelöst.
Dies ermöglicht im Vergleich zu einem Querträger mit konstantem Querschnittsprofil eine signifikante Gewichtsreduktion bei verbesserten Steifigkeitseigenschaften.
Zudem ist der Querträger einfach und kostengünstig herstellbar. Insbesondere kann der erfindungsgemäße Querträger aus einem Blech mit konstanter Wanddicke hergestellt werden. Die Taillierung des Querträgers ermöglicht eine weitere Gewichtsreduktion. Gleichzeitig bleibt eine stabile Anbindung des Querträgers an die Längslenker einer Verbundlenkerachse gewährleistet. Insbesondere kann bei einer Schweißverbindung eine hinreichend große Schweißnahtlänge an der Anbindung an die Längslenker gewährleistet werden.
Vorteilhafte Ausgestaltungen der Erfindung sind Gegenstand weiterer Patentansprüche.
Es hat sich gezeigt, dass ein maximaler Neigungsunterschied am Verbindungssteg zwischen dem Mittelabschnitt und den weiter außen gelegenen Abschnitten im Bereich von 5° bis 20° von Vorteil ist. Weiter bevorzugt liegt der maximale Neigungsunterschied im Bereich von 8° bis 13°. Die Taillierung des Querträgers kann allein über die Schenkel erzielt werden. Dazu können beispielsweise die Schenkel im Mittelabschnitt des Querträgers steiler angestellt sein als an den weiter außen gelegenen Abschnitten.
Vorzugsweise weist jedoch der Verbindungssteg im Mittelabschnitt des Querträgers eine Taillierung quer zur Längserstreckungsrichtung des Querträgers auf.

Über die Neigung und die Taillierung lassen sich die Biegesteifigkeit und das Torsionsverhalten des Querträgers sowie einer damit ausgestatteten Verbundlenkerachse einstellen. Dabei kann sowohl die Biegesteifigkeit als auch die Torsionssteifigkeit entlang der Längserstreckungsrichtung des Querträgers variieren.

Wie bereits erwähnt, kann ein solcher Querträger als Blechformteil mit konstanter Wanddicke ausgebildet sein, so dass sich dieser besonders einfach und kostengünstig mit einem in Längserstreckungsrichtung des Querträgers variablen Querschnitt herstellen lässt.

Durch einen kontinuierlich stetigen Übergang des Mittelabschnitts in die weiter außen gelegenen Abschnitte werden Sprünge in der Biege- und Torsionssteifigkeit vermieden. Die damit verbundene Vermeidung von Spannungsüberhöhungen gestattet eine weitere Gewichtsreduzierung.

Weiterhin kann der Querträger in der Profilhöhe verjüngte Endabschnitte aufweisen, an welchen der Verbindungssteg zur Längserstreckungsrichtung jeweils nach außen abfallend geneigt ist. Dies ermöglicht eine weiche Zunahme der Torsionssteifigkeit zu den Längslenkern hin und vermeidet Spannungsspitzen in diesem Bereich.

Ferner können die verjüngten Endabschnitte in Ankopplungsabschnitten auslaufen, welche jeweils einen Beschnitt zum Umgreifen eines quer zum Querträger verlaufenden Profils aufweisen. Dies gestattet eine einfache und stabile Anbindung des Querträgers an die Längslenker.

Eine erfindungsgemäße Verbundlenkerachse für ein Kraftfahrzeug umfasst neben dem vorstehend erläuterten Querträger zwei Längslenker, die jeweils einen ersten Endabschnitt zur Ankopplung an einen Fahrzeugaufbau und einen zweiten Endabschnitt zur Ankopplung eines Fahrzeugrads aufweisen. Dabei verbindet der Querträger die beiden Längslenker miteinander.

In einer vorteilhaften Ausgestaltung erfolgt die Anordnung des Querträgers zu den Längslenkern derart, dass der Profilquerschnitt des Verbindungsstegs an den weiter außen gelegenen Abschnitten im Bereich minimaler Neigung parallel zu den Längslenkern im Bereich der Ankopplung des Querträgers ist. Insbesondere können die Oberseiten der Längslenker im Ankopplungsbereich und der Bereich minimaler Neigung an den weiter außen gelegenen Abschnitten der Querträgers parallel zueinander sein.

Nachfolgend wird die Erfindung anhand eines in der Zeichnung dargestellten Ausführungsbeispiels näher erläutert. Die Zeichnung zeigt in:
- Figur 1: eine Ansicht eines Ausführungsbeispiels für eine Verbundlenkerachse mit einem Querträger nach der Erfindung,
- Figur 2: eine Ansicht des Querträgers von oben,
- Figur 3: eine Seitenansicht des Querträgers,
- Figur 4: einen Schnitt entlang der Linie IV-IV in Figur 2, und in
- Figur 5: einen Schnitt entlang der Linie V-V in Figur 2.

Das Ausführungsbeispiel bezieht sich auf eine Verbundlenkerachse 1 für ein Personkraftfahrzeug, über welche die Hinterräder des Fahrzeugs gegen dessen Aufbau abgestützt werden können.

Die Verbundlenkerachse 1 weist zwei sich im Wesentlichen in Fahrzeuglängsrichtung erstreckende, gegebenenfalls auch gepfeilt angeordnete Längslenker 2 auf, welche durch einen Querträger 3 miteinander verbunden sind. Jeder Längslenker 2 weist an einem in Fahrtrichtung vornliegenden Endabschnitt eine Lageraufnahme 4 für ein Gummi-Metall-Lager zur gelenkigen Ankopplung an den Fahrzeugaufbau auf. Die Verbundlenkerachse 1 kann dementsprechend um eine horizontale, in Fahrzeugquerrichtung verlaufende Achse schwenkbar am Fahrzeugaufbau gelagert werden. Ferner ist an rückseitigen Endabschnitten der Längslenker 2 jeweils ein Radträger 5 zur Lagerung eines Fahrzeugrads vorgesehen.

Die Längslenker 2 sind bezogen auf eine zum Querträger 3 parallele Achse im Wesentlichen biege- und torsionssteif ausgebildet und können geschmiedet, gegossen oder in Schweißkonstruktion ausgeführt sein. Bei dem dargestellten Ausführungsbeispiel sind diese zumindest abschnittsweise als Hohlprofilelemente ausgeführt.

Der Querträger 3 der Verbundlenkerachse 1 ist biegesteif, jedoch torsionsweich ausgeführt, um ein wechselseitiges Ein- und Ausfedern der Längslenker 2 zu ermöglichen. Die Torsion des Querträgers 3 wirkt dabei einer Verschränkung der Längslenker 2 federelastisch entgegen.

Der Querträger 3 weist ein hohles Profil auf, das an einer Längsseite offen ist. Der Querträger 3 ist somit weder ein flaches Blechstück noch ein Rohr oder ein verformter Rohrkörper. Bei dem dargestellten Ausführungsbeispiel weist die offene Seite in Einbaulage nach unten, wobei der Profilquerschnitt im Wesentlichen U-förmig ist. Jedoch kann ein solches Profil auch in anderer Lage eingebaut sein, so dass die offene Seite beispielsweise in Fahrtrichtung, entgegengesetzt der Fahrtrichtung oder in einer Zwischenposition angeordnet ist.

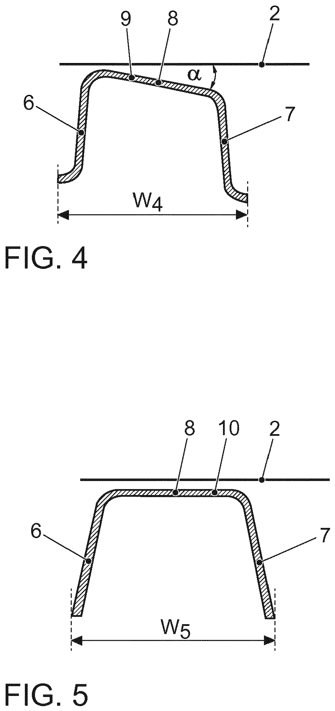

Wie insbesondere den Figuren 4 und 5 entnommen werden kann, weist der Querträger 3 im Profil zwei voneinander beabstandete Schenkel 6 und 7 auf, die durch einen Verbindungssteg 8 verbunden sind. Der Verbindungssteg 8 setzt jeweils an einem Ende eines Schenkels 6, 7 an. Das jeweils andere Ende der Schenkel 6, 7 ist frei und kann nach außen oder innen umgebogen sein.

Wie Figur 4 zeigt, ist der Verbindungssteg 8 in einem Mittelabschnitt 9 des Querträgers 3 in Richtung eines der Schenkel 7 geneigt. Der Mittelabschnitt 9 erstreckt sich dabei in Bezug auf die Längserstreckungsrichtung des Querträgers 3 über die Mitte desselben. An den Mittelabschnitt 9 grenzen beidseits zwei weiter außen gelegene Abschnitte 10 und 11 an, an denen der Verbindungssteg 8 weniger stark oder nicht geneigt ist, wie dies Figur 5 entnommen werden kann.

Der maximale Neigungsunterschied am Verbindungssteg 8 zwischen dem Mittelabschnitt 9 und den weiter außen gelegenen Abschnitten 10 und 11 liegt im Bereich von 5° bis 20° und weiter bevorzugt im Bereich 8° bis 13°. Die Veränderung des Neigungswinkels α entlang der Längserstreckungsrichtung des Querträgers 3 erfolgt bevorzugt kontinuierlich und ohne Sprünge oder Kanten. Aus dieser Querschnittsvariation erfolgt ein Gewinn an Biegesteifigkeit, welche eine Gewichtsreduktion des Querträgers 3 ermöglicht.

Bei dem dargestellten Ausführungsbeispiel ist die Oberseite des Querträgers 3 in der Mitte einseitig steifigkeitsoptimiert abgesenkt und zu den axialen Enden des Querträgers 3 hin parallel zu den Längslenkern 2 orientiert. Insbesondere kann hierbei der Profilquerschnitt des Verbindungsstegs 8 an den weiter außen gelegenen Abschnitten 10 und 11 im Bereich minimaler Neigung parallel zu den Längslenkern 2 im Bereich der Ankopplung des Querträgers 3 sein. Die Parallelausrichtung kann dabei zur Längsachse oder zur Oberkante der Längslenker 2 im Anbindungsbereich vorgenommen sein. Ein Profil mit einseitiger Mittenabsenkung kann jedoch auch in anderer Winkelstellung zwischen den Längslenkern 2 eingebaut sein.

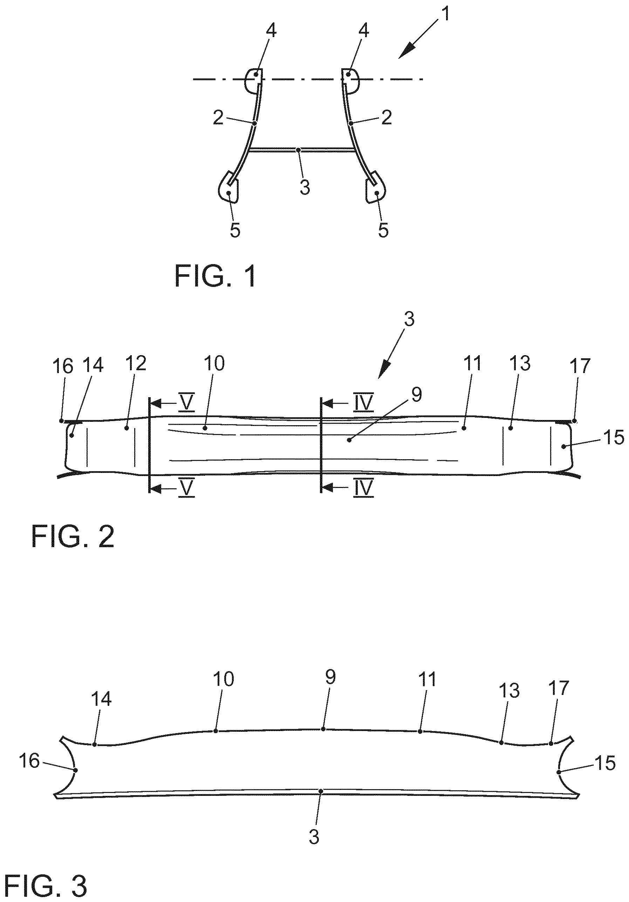

Weiterhin ist, wie Figur 2 entnommen werden kann, der Querträger 3 in Längserstreckungsrichtung tailliert. Wie den Figuren 4 und 5 entnommen werden kann, ist die Profilbreite w₄ im Mittelabschnitt 9 um etwa 5 bis 20 mm kleiner als die Profilbreite w₅ an den weiter außen gelegenen Abschnitten 10 und 11.

Hierzu kann der Verbindungssteg 8 im Mittelabschnitt 9 des Querträgers 3 eine Taillierung quer zur Längserstreckungsrichtung des Querträgers 3 aufweisen. Alternativ oder ergänzend können die Schenkel 6 und 7 im Mittelabschnitt 9 des Querträgers 3 steiler angestellt sein als an den weiter außen gelegenen Abschnitten 10 und 11.

Weiterhin weist der Querträger 3 in der Profilhöhe verjüngte Endabschnitte 12 und 13 auf, die axial an die an weiter außen gelegenen Abschnitten 10 und 11 angrenzen. Der Verbindungssteg 8 ist hier zur Längserstreckungsrichtung jeweils zu den Enden des Querträgers 3 hin abfallend geneigt. Die Ausrichtung quer zur Längserstreckungsrichtung entspricht dabei den Abschnitten 10 und 11. Der maximale Neigungsunterschied quer zur Längserstreckungsrichtung ist hier vorzugsweise kleiner als 5°.

Die verjüngten Endabschnitte 12 und 13 laufen in Ankopplungsabschnitten 14 und 15 aus, welche an ihrem Stirnende jeweils einen vorzugsweise bogenförmigen Beschnitt 16 und 17 zum zumindest teilweisen Umgreifen eines quer zum Querträger 3 verlaufenden Profils aufweisen. Der Querträger 3 ist in diesem Bereich mit den dort überwiegend horizontal verlaufenden Längslenkern 2 verschweißt. Durch die Verbreiterung des Profils des Querträgers 3 zu den Ankopplungsabschnitten 14 und 15 hin wird eine möglichst lange Anschweißkontur ermöglicht.

Der vorstehend erläuterte Querträger 3 mit in Längserstreckungsrichtung variablem Querschnitt kann als Bleckformteil mit konstanter Wanddicke ausgebildet werden, so dass dieser besonders einfach und kostengünstig herstellbar ist. Eine noch weitergehende Steifigkeitsoptimierung und Gewichtsreduktion kann durch eine Wanddickenvariation, beispielsweise durch den Einsatz von Tailored Blanks erzielt werden, ist jedoch dementsprechend etwas aufwändiger.

Die Erfindung wurde vorstehend anhand eines Ausführungsbeispiels und weiterer Abwandlungen näher erläutert. Sie ist jedoch nicht hierauf beschränkt. Vielmehr können diesbezügliche Einzelmerkmale, wie sie vorstehend erläutert wurden, auch dann miteinander kombiniert werden, wenn dies nicht ausdrücklich beschrieben ist, solange dies technisch möglich. Die Erfindung umfasst insbesondere alle durch die Patentansprüche definierten Ausgestaltungen.

### Bezugszeichenliste

- 1: Verbundlenkerachse
- 2: Längslenker
- 3: Querträger
- 4: Lageraufnahme
- 5: Radträger
- 6: Schenkel
- 7: Schenkel
- 8: Verbindungssteg
- 9: Mittelabschnitt
- 10: weiter außen gelegener Abschnitt
- 11: weiter außen gelegener Abschnitt
- 12: Endabschnitt
- 13: Endabschnitt
- 14: Ankopplungsabschnitt
- 15: Ankopplungsabschnitt
- 16: Beschnitt
- 17: Beschnitt
- α: Neigungswinkel
- w₄: Profilbreite
- w₅: Profilbreite

## Patentansprüche

1. Querträger (3) für eine Verbundlenkerachse mit einem an einer Längsseite offenen und im Querschnitt U-förmigen Profil, welches zwei voneinander beabstandete Schenkel (6,7) und einen diese verbindenden Verbindungssteg (8) aufweist,
wobei
der Verbindungssteg (8) in einem Mittelabschnitt (9) des Querträgers (3), welcher sich in Bezug auf die Längserstreckungsrichtung des Querträgers (3) über die Mitte desselben erstreckt, in Richtung eines der Schenkel (7) geneigt ist, und
der Querträger (3) weiter außen gelegene Abschnitte (10, 11) aufweist, an denen der Verbindungssteg (8) weniger stark oder nicht geneigt ist,
**dadurch gekennzeichnet, dass**
der Querträger (3) in Längserstreckungsrichtung tailliert ist, so dass die Profilbreite (w₄) im Mittelabschnitt (9) kleiner als die Profilbreite (w₅) an den weiter außen gelegenen Abschnitten (10,11) ist.

2. Querträger nach Anspruch 1, **dadurch gekennzeichnet, dass** der maximale Neigungsunterschied am Verbindungssteg (8) zwischen dem Mittelabschnitt (9) und den weiter außen gelegenen Abschnitten (10, 11) im Bereich von 5° bis 20°, vorzugsweise 8° bis 13° liegt.

3. Querträger nach Anspruch 1 oder 2, **dadurch gekennzeichnet, dass** der Verbindungssteg (8) im Mittelabschnitt (9) des Querträgers (3) eine Taillierung quer zur Längserstreckungsrichtung des Querträgers (3) aufweist.

4. Querträger nach einem der Ansprüche 1 bis 3, **dadurch gekennzeichnet, dass** die Schenkel (6, 7) im Mittelabschnitt (9) des Querträgers (3) steiler angestellt sind als an den weiter außen gelegenen Abschnitten (10, 11).

5. Querträger nach einem der Ansprüche 1 bis 4, **dadurch gekennzeichnet, dass** der Querträger (3) als Blechformteil mit konstanter Wanddicke und mit Längserstreckungsrichtung des Querträgers (3) variablem Querschnitt ausgebildet ist.

6. Querträger nach einem der Ansprüche 1 bis 5, **dadurch gekennzeichnet, dass** der Mittelabschnitt (9) kontinuierlich und stetig in die weiter außen gelegenen Abschnitte (10, 11) übergeht.

7. Querträger nach einem der Ansprüche 1 bis 6, **dadurch gekennzeichnet, dass** der Querträger (3) in der Profilhöhe verjüngte Endabschnitte (12, 13) aufweist, an welchen der Verbindungssteg (8) zur Längserstreckungsrichtung jeweils zum Ende des Querträgers (3) hin abfallend geneigt ist.

8. Querträger nach Anspruch 7, **dadurch gekennzeichnet, dass** die verjüngten Endabschnitte (12, 13) in Ankopplungsabschnitten (14, 15) auslaufen, welche jeweils einen Beschnitt zum Umgreifen eines quer zum Querträger (3) verlaufenden Profils aufweisen.

9. Verbundlenkerachse für ein Kraftfahrzeug, umfassend:
zwei Längslenker (2), die jeweils einen ersten Endabschnitt zur Ankopplung an einen Fahrzeugaufbau und einen zweiten Endabschnitt zur Ankopplung eines Fahrzeugrads aufweisen, und
einen Querträger (3) nach einem der vorgenannten Ansprüche, der die beiden Längslenker (2) miteinander verbindet, wobei der Profilquerschnitt des Verbindungsstegs (8) an den weiter außen gelegenen Abschnitten (10, 11) im Bereich minimaler Neigung parallel zu den Längslenkern (2) im Bereich der Ankopplung an den Querträger (3) ist.

## Claims

1. Crossmember (3) for a torsion beam axle having a profile which is open on a longitudinal side, is of U-shaped cross section, and has two limbs (6, 7) which are spaced apart from one another and a connecting web (8) which connects them, the connecting web (8) being inclined in the direction of one of the limbs (7) in a centre section (9) of the crossmember (3), which centre section (9), in relation to the longitudinal extent direction of the crossmember (3), extends over the centre of the latter, and the crossmember (3) having sections (10, 11) which lie further to the outside and on which the connecting web (8) is inclined to a less pronounced extent or is not inclined, **characterized in that** the crossmember (3) is tapered in the longitudinal extent direction, with the result that the profile width (w₄) in the centre section (9) is smaller than the profile width (w₅) on the sections (10, 11) which lie further to the outside.

2. Crossmember according to Claim 1, **characterized in that** the maximum inclination difference on the connecting web (8) between the centre section (9) and the sections (10, 11) which lie further to the outside lies in the range from 5° to 20°, preferably from 8° to 13°.

3. Crossmember according to Claim 1 or 2, **characterized in that** the connecting web (8) in the centre section (9) of the crossmember (3) has a taper transversely with respect to the longitudinal extent direction of the crossmember (3).

4. Crossmember according to one of Claims 1 to 3, **characterized in that** the limbs (6, 7) in the centre section (9) of the crossmember (3) are set more steeply than on the sections (10, 11) which lie further to the outside.

5. Crossmember according to one of Claims 1 to 4, **characterized in that** the crossmember (3) is configured as a shaped sheet metal part with a constant wall thickness and with a variable cross section in the longitudinal extent direction of the crossmember (3).

6. Crossmember according to one of Claims 1 to 5, **characterized in that** the centre section (9) merges continuously and steadily into the sections (10, 11) which lie further to the outside.

7. Crossmember according to one of Claims 1 to 6, **characterized in that** the crossmember (3) has end sections (12, 13) which are tapered in the profile vertical direction and on which the connecting web (8) is inclined with respect to the longitudinal extent direction in each case so as to drop towards the end of the crossmember (3).

8. Crossmember according to Claim 7, **characterized in that** the tapered end sections (12, 13) taper off in coupling sections (14, 15) which in each case have a trimmed portion for engaging over a profile which runs transversely with respect to the crossmember (3).

9. Torsion beam axle for a motor vehicle, comprising:
two trailing arms (2) which in each case have a first end section for coupling to a vehicle body and a second end section for coupling of a vehicle wheel, and
a crossmember (3) according to one of the preceding claims which connects the two trailing arms (2) to one another, the profile cross section of the connecting web (8) on the sections (10, 11) which lie further to the outside being in the range of minimum inclination parallel to the trailing arms (2) in the region of the coupling to the crossmember (3).

## Revendications

1. Traverse (3) pour un essieu à traverse déformable en torsion comprenant un profilé ouvert au niveau d'un côté longitudinal et en forme de U en section transversale, qui présente deux branches (6, 7) espacées l'une de l'autre et une nervure de liaison (8) les reliant,
la nervure de liaison (8) étant inclinée dans la direction de l'une des branches (7) dans une portion centrale (9) de la traverse (3) qui s'étend sur le milieu de celle-ci par rapport à la direction d'étendue longitudinale de la traverse (3), et
la traverse (3) présentant des portions (10, 11) placées davantage vers l'extérieur, au niveau desquelles la nervure de liaison (8) est plus ou moins fortement inclinée ou n'est pas inclinée, **caractérisée en ce que**
la traverse (3) est amincie dans la direction d'étendue longitudinale de telle sorte que la largeur du profilé (w₄) dans la portion centrale (9) soit inférieure à la largeur du profilé (w₅) au niveau des portions (10, 11) placées davantage vers l'extérieur.

2. Traverse selon la revendication 1, **caractérisée en ce que** la différence d'inclinaison maximale au niveau de la nervure de liaison (8) entre la portion centrale (9) et les portions (10, 11) placées davantage vers l'extérieur est de l'ordre de 5° à 20°, de préférence de 8° à 13°.

3. Traverse selon la revendication 1 ou 2, **caractérisée en ce que** la nervure de liaison (8) présente, dans la portion centrale (9) de la traverse (3), un amincissement transversalement à la direction d'étendue longitudinale de la traverse (3).

4. Traverse selon l'une quelconque des revendications 1 à 3, **caractérisée en ce que** les branches (6, 7) dans la portion centrale (9) de la traverse (3) sont plus fortement inclinées qu'au niveau des portions (10, 11) placées davantage vers l'extérieur.

5. Traverse selon l'une quelconque des revendications 1 à 4, **caractérisée en ce que** la traverse (3) est réalisée sous forme de pièce moulée en tôle ayant une épaisseur de paroi constante et une section transversale variable dans la direction d'étendue longitudinale de la traverse (3).

6. Traverse selon l'une quelconque des revendications 1 à 5, **caractérisée en ce que** la portion centrale (9) se prolonge en continu et de manière régulière dans les portions (10, 11) placées davantage vers l'extérieur.

7. Traverse selon l'une quelconque des revendications 1 à 6, **caractérisée en ce que** la traverse (3) présente des portions d'extrémité (12, 13) de hauteur de profilé rétrécie, au niveau desquelles la nervure de liaison (8) est inclinée en descendant à chaque fois vers l'extrémité de la traverse (3), par rapport à la direction d'étendue longitudinale.

8. Traverse selon la revendication 7, **caractérisée en ce que** les portions d'extrémité rétrécies (12, 13) se terminent par des portions d'accouplement (14, 15) qui présentent à chaque fois une partie creusée destinée à venir en prise autour d'un profilé s'étendant transversalement à la traverse (3) .

9. Essieu à traverse déformable en torsion pour un véhicule automobile, comprenant :
deux bras oscillants longitudinaux (2) qui présentent chacun une première portion d'extrémité pour l'accouplement à une carrosserie de véhicule et une deuxième portion d'extrémité pour l'accouplement d'une roue de véhicule, et
une traverse (3) selon l'une quelconque des revendications précédentes, qui relie l'un à l'autre les deux bras oscillants longitudinaux (2), la section transversale du profilé de la nervure de liaison (8) au niveau des portions (10, 11) placées davantage vers l'extérieur dans la région d'une inclinaison minimale étant parallèle aux bras oscillants longitudinaux (2) dans la région de l'accouplement à la traverse (3).
